# EUROPEAN PATENT APPLICATION

(11) **EP 3 444 061 A1**
(43) Date of publication of application: **20.02.2019**
(21) Application number: 17782462.0
(22) Date of filing: 13.04.2017
(51) Int. Cl.: B23K 9/133, B23K 9/073, B23K 9/12, B23K 9/173

(54) **ARC WELDING DEVICE**

(30) Priority: 13.04.2016 JP 2016080661
(71) Applicant: Kabushiki Kaisha Kobe Seiko Sho (Kobe Steel, Ltd.), Kobe-shi, Hyogo 651-8585 (JP)
(72) Inventor: MARUYAMA Tokuji, Kanagawa 251-8551 (JP); SUZUKI Reiichi, Kanagawa 251-8551 (JP); YASHIMA Takashi, Kanagawa 251-8551 (JP)
(74) Representative: Müller-Boré & Partner Patentanwälte PartG mbB
(86) International application number: PCT/JP2017/015107
(87) International publication number: WO 2017/179649

(57) **Abstract**

An arc welding device is provided with: a wire feed motor; a rocker arm attached freely rotatably to an output shaft of the wire feed motor; a pair of wire feed rollers attached to the rocker arm; a rotation transmitting mechanism for transmitting the rotation of the wire feed motor to the wire feed roller; a rocker drive unit; and a welding power supply unit. The wire feed roller has inserted therein welding wire disposed along the rocking direction of the rocker arm. The welding wire is fed towards a torch tip by the wire feed roller, and arcing and shorting can be repeated with forward and backward movement by the rocker arm in the direction of the wire feed.

## Description

### Technical Field

The present invention relates to an arc welding device.

### Background Art

In recent years, as a welding method in which spatters can be significantly reduced with a low heat input suitable for thin plates, some welding methods have been proposed in which a welding wire is caused to reciprocate in a direction of wire feed, whereby arcing and shorting are caused repeatedly at the distal end of the welding wire.

One of techniques employing such a method is disclosed by PTL 1. In this technique, wire feed rollers are rotated in the normal and reverse directions at a frequency of 50 to 80 Hz, whereby a welding wire is caused to reciprocate. However, this method requires a high-performance servo motor and a high control technique.

Other techniques are disclosed by PTL 2 and PTL 3. According to PTL 2, a wire guide that guides a welding wire in a torch is rocked by a drive device connected to the wire guide, whereby the welding wire is caused to reciprocate. According to PTL 3, a wire is caused to reciprocate by changing the length of a feed path between a wire feeder and a torch. In the method disclosed by PTL 3, the wire guide is rocked by using a motor serving as a drive device, the same as in the method disclosed by PTL 2. In each of these methods disclosed by PTL 2 and PTL 3, the welding wire is caused to reciprocate with only the normal rotation of the motor. In such a method, however, the reciprocating motion of the welding wire is affected by a gap provided between the wire guide and the welding wire, resulting in possible irregularities in the stroke by which the wire reciprocates.

### Citation List

### Patent Literature

PTL 1: Japanese Unexamined Patent Application Publication (Translation of PCT Application) No. 2008-542027
PTL 2: Japanese Patent No. 5026603
PTL 3: Japanese Unexamined Patent Application Publication No. 2003-10970

### Summary of Invention

### Technical Problem

The present invention provides an arc welding device and an arc welding method in which a welding wire is caused to reciprocate with the rotation of a motor only in one direction, and stable welding is thus realized with a simple configuration, whereby the adjustment of bead shape is facilitated.

### Solution to Problem

The present invention is as follows.
(1) An arc welding device that performs welding by generating an arc from a welding wire that is fed to a torch tip of a welding torch, the device comprising:
   a wire feed motor;
   a rocker arm attached rotatably on an output shaft of the wire feed motor;
   a pair of wire feed rollers attached rotatably on the rocker arm;
   a rotation transmitting mechanism that transmits rotation of the wire feed motor to the wire feed rollers;
   a rocker drive unit that rocks the rocker arm; and
   a welding power supply unit that supplies a welding current to the welding wire,
   wherein the pair of wire feed rollers are provided on an upstream side with respect to the torch tip in a direction of wire feed and nip in between the welding wire extending in a direction of rocking of the rocker arm, and
   wherein arcing and shorting are repeated at a distal end of the welding wire by feeding the welding wire toward the torch tip with the rotation of the wire feed rollers while causing the welding wire to reciprocate in the direction of wire feed with the rocking of the rocker arm.
(2) An arc welding method in which welding is performed by generating an arc from a welding wire that is fed to a torch tip of a welding torch, the method comprising:
   feeding the welding wire nipped between a pair of wire feed rollers attached to a rocker arm that is rotatable on an output shaft of a wire feed motor to the torch tip by rotating the pair of wire feed rollers by a use of the wire feed motor; causing the welding wire to reciprocate in a direction of wire feed by rocking the rocker arm; and supplying a welding current to the welding wire from a welding power supply unit such that arcing and shorting are repeated at a distal end of the welding wire,
   wherein the welding power supply unit outputs the welding current in an output cycle including
      a first term in which a low current Ias is outputted after a short circuit is opened and an arc is generated;
      a second term in which an arcing-duration pulsed current lap that is higher than the low current Ias and is intended for generation of a droplet is outputted;
      a third term in which after the arcing-duration pulsed current lap is outputted, a base current Iab that is lower than the arcing-duration pulsed current lap is outputted until a short circuit occurs;
      a fourth term in which after the arc is extinguished, a low current Iss is outputted;
      a fifth term in which a shorting-duration pulsed current Isp that is higher than the low current Iss is outputted until a total duration Tt elapsed from a start of the first term reaches 70 to 95% of a rocking period τ of the rocker arm; and
      a sixth term in which a short-circuit base current Isb that is lower than the shorting-duration pulsed current Isp is outputted until another arc is generated.

### Advantageous Effects of Invention

According to the present invention, a welding wire can be caused to reciprocate with the rotation of a motor only in one direction, and stable welding is thus realized with a simple configuration.

### Brief Description of Drawings

[Fig. 1] Fig. 1 is a diagram of an arc welding device according to a first exemplary configuration.
[Fig. 2] Fig. 2 is a diagram of an arc welding device according to a second exemplary configuration.
[Fig. 3] Fig. 3 is a diagram of an arc welding device according to a third exemplary configuration.
[Fig. 4A] Fig. 4A is a sectional view taken along line IV-IV and seen on arrows illustrated in Fig. 3.
[Fig. 4B] Fig. 4B is another sectional view taken along line IV-IV and seen on arrows illustrated in Fig. 3.
[Fig. 5] Fig. 5 is a diagram of an arc welding device according to a fourth exemplary configuration.
[Fig. 6A] Fig. 6A is a front view of relevant elements included in an arc welding device according to a fifth exemplary configuration.
[Fig. 6B] Fig. 6B is a diagram of relevant elements included in the arc welding device according to the fifth exemplary configuration and is a sectional view of a disc-shaped rotatable body and a bracket illustrated in Fig. 6A.
[Fig. 7] Fig. 7 is a diagram of relevant elements included in an arc welding device according to a sixth exemplary configuration.
[Fig. 8] Fig. 8 is a diagram of relevant elements included in an arc welding device according to a seventh exemplary configuration.
[Fig. 9] Fig. 9 is a timing chart illustrating waveforms of a welding current and a welding voltage.
[Fig. 10] Fig. 10 is a graph illustrating the welding current and a locus of a reciprocating motion made by a wire.
[Fig. 11] Fig. 11 is a control block diagram of the arc welding device.
[Fig. 12] Fig. 12 is another timing chart illustrating waveforms of a welding current and a welding voltage.
[Fig. 13A] Fig. 13A is a diagram schematically illustrating changes in arc length.
[Fig. 13B] Fig. 13B is another diagram schematically illustrating changes in arc length.
[Fig. 14] Fig. 14 is another control block diagram of the arc welding device.

### Description of Embodiments

Embodiments of the present invention will now be described in detail with reference to the drawings.

### <First Exemplary Configuration>

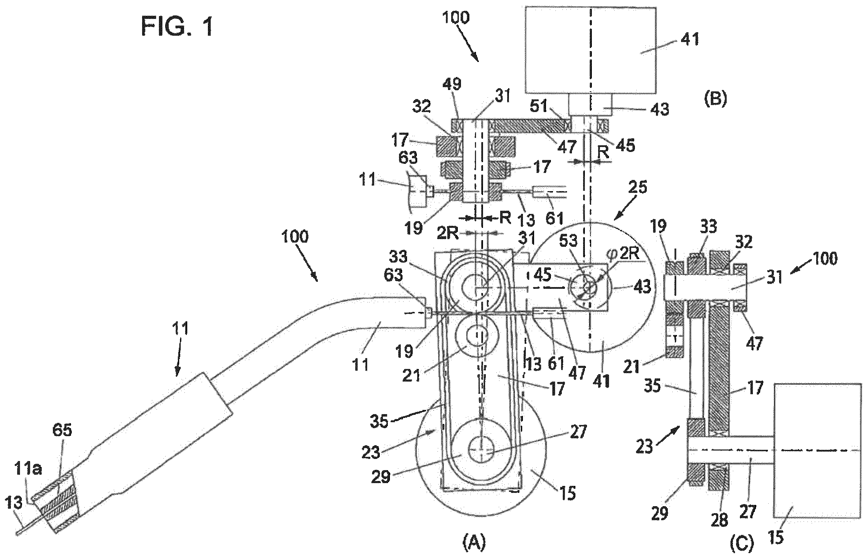

Fig. 1 is a diagram of an arc welding device according to a first exemplary configuration, including part (A) as a front view illustrating relevant elements of the arc welding device, part (B) as a partially sectional top view of the arc welding device illustrated in part (A), and part (C) as a side view of the arc welding device illustrated in part (A).

An arc welding device 100 generates an arc from the distal end of a welding wire 13 that is fed to a torch tip 11a of a welding torch 11, thereby welding a welding object member, not illustrated. The arc welding device 100 includes a wire feed motor 15, a rocker arm 17, a pair of wire feed rollers 19 and 21, a rotation transmitting mechanism 23 that is a belt drive mechanism, a rocker drive unit 25 including a rocker drive arm 47, and a welding power supply unit, not illustrated.

The wire feed motor 15 is a motor fixed to a support frame, not illustrated, and an output shaft 27 thereof rotatably supports one end of the rocker arm 17.

The rocker arm 17 is attached to the output shaft 27 of the wire feed motor 15 with the aid of a bearing 28, thereby being supported rotatably on the output shaft 27. The other end of the rocker arm 17 that is opposite the output shaft 27 is provided with a rotating shaft 31 supported rotatably with the aid of a bearing 32. The rotating shaft 31 is provided with the wire feed roller 19 fixed thereto. The output shaft 27 at the one end of the rocker arm 17 is provided with a pulley 29 fixed coaxially thereto. The rotating shaft 31 provided with the wire feed roller 19 at the other end is provided with a pulley 33 fixed thereto. The pulleys 29 and 33 are provided with a timing belt 35, as a belt for power transmission, stretched therebetween. The pulleys 29 and 33 and the timing belt 35 form the rotation transmitting mechanism 23 that is a belt transmission mechanism.

The rotation of the wire feed motor 15 is transmitted from the pulley 29 to the pulley 33 through the belt 35, and the rotation of the pulley 33 is transmitted to the wire feed roller 19 through the rotating shaft 31. The wire feed roller 21 is a pressure roller that is pressed against the wire feed roller 19 by a pressure spring, not illustrated, and is rotatably supported by the rocker arm 17. The pair of wire feed rollers 19 and 21 nip the welding wire 13 therebetween. The welding wire 13 is fed from a side of the welding torch 11 that is nearer to the wire feed rollers 19 and 21 toward the torch tip 11a. The pair of wire feed rollers 19 and 21 are positioned on the upstream side with respect to the torch tip 11a in the direction of wire feed.

The rocker drive unit 25 includes a rocker drive motor 41, an eccentric shaft 45 that is rotated by an output shaft 43 of the rocker drive motor 41 and has a center of rotation positioned eccentrically with respect to the axis of the output shaft 43, and the rocker drive arm 47. The rocker drive arm 47 is rotatably supported at one end thereof on the rotating shaft 31, provided on the rocker arm 17, with the aid of a bearing 49 and at the other end thereof on the outer periphery of the eccentric shaft 45 with the aid of a bearing 51.

When the eccentric shaft 45 is rotated with the rotation of the rocker drive motor 41, the rocker drive arm 47 undergoes a circular motion such that the axis of the bearing 51 moves along a locus 53. In accordance with the radial displacement of the outer periphery of the eccentric shaft 45 thus rotated, a side of the rocker drive arm 47 on which the rotating shaft 31 is provided undergoes a reciprocating motion along an arc. That is, with the rotation of the rocker drive motor 41, the rocker arm 17 is rocked on the output shaft 27, and the pair of wire feed rollers 19 and 21 are also rocked with the rocker arm 17. The direction of rocking of the rocker arm 17 is set to substantially the same as the direction in which the welding wire 13 nipped between the pair of wire feed rollers 19 and 21 extends.

Letting the eccentricity of the eccentric shaft 45 be R, the range of rocking of the rocker drive arm 47 on a side thereof having the eccentric shaft 45 is expressed as 2R. On the side of the rocker drive arm 47 that has the rotating shaft 31, or the side of the rocker arm 17 that has the rotating shaft 31, there is a long distance between the axis of the output shaft 27 of the wire feed motor 15 and the axis of each of the rotating shafts of the pair of wire feed rollers 19 and 21. Therefore, the side of the rocker drive arm 47 that has the rotating shaft 31 is rocked along an almost linear, extremely gentle arc-shaped locus.

A portion of the welding wire 13 that is on the upstream side with respect to the pair of wire feed rollers 19 and 21 in the direction of wire feed is covered with a first conduit liner 61, which is a first liner member. The first conduit liner 61 guides the welding wire 13 prepared on a spool or in a pack, not illustrated, to the position of the pair of wire feed rollers 19 and 21. A portion of the welding wire 13 that is on the downstream side in the direction of wire feed is covered with a second conduit liner 63, which is a second liner member. The second conduit liner 63 extends up to a position near a contact tip 65 of the welding torch 11. The welding wire 13 is supplied with a welding current from the contact tip 65 provided at the torch tip 11a of the welding torch 11, whereby welding is performed. The second conduit liner 63 illustrated in the drawing is shorter than the first conduit liner 61 and may therefore be replaced with a guide to be formed in the welding torch 11.

Supposing that the rocker drive arm 47 is moved by the eccentric shaft 45 having the eccentricity R, the locus 53 of the axis of the bearing 51 attached to the rocker drive arm 47 is expressed as Rsin((ωt+α), where ω denotes the angular speed of rotation of the eccentric shaft 45, t denotes time, and α denotes phase difference. The loci of the pair of wire feed rollers 19 and 21 are each approximately expressed as Rsin(ωt+α) with slight errors, because the pair of wire feed rollers 19 and 21 are connected to the rocker drive arm 47 with a link mechanism interposed therebetween.

Hence, in the arc welding device 100 configured as above, the welding wire 13 is fed at a speed resulting from a synthesis of a speed of wire feed Vw at which the wire feed rollers 19 and 21 rotated by the wire feed motor 15 feeds the welding wire 13 toward the torch tip 11a and the speed of the above rocking motion. Specifically, the welding wire 13 that is reciprocating is fed toward the torch tip 11a at a synthetized speed of wire feed Vs obtained by adding the above speed of wire feed Vw and a speed of reciprocation Rωcos(ωt+α) at which the rocker arm 17 is rocked in the direction of wire feed by the rocker drive motor 41, i.e., Vw+Rωcos(ωt+α).

In such a configuration, the welding wire 13 undergoes a reciprocating motion at the speed of reciprocation Rωcos(ωt+α) while being assuredly gripped by the wire feed rollers 19 and 21. That is, the welding wire 13 can be caused to reciprocate with the rotation of the wire feed motor 15 only in one direction, with no reversal of the direction of rotation of the wire feed motor 15 between the forward and backward directions. With such a reciprocating motion of the welding wire 13, stable welding is realized with no errors in the period of arcing and shorting. Furthermore, the total mass of rocking bodies including the pair of wire feed rollers 19 and 21, the rocker arm 17, the rocker drive arm 47, the pulleys 29 and 33, and so forth can be reduced. For example, compared with a prior-art mechanism including wire feed rollers directly attached to an output shaft 27 of a wire feed motor 15 and that rocks the wire feed motor 15 and a wire-feed-motor decelerator, not illustrated, the total mass of the rocking bodies can be reduced to about 1/20. According to the present configuration, the force of causing all of the rocking bodies including the pair of wire feed rollers 19 and 21 and the rotation transmitting mechanism 23 to reciprocate can be reduced significantly, and even a high-speed reciprocating motion at, for example, 100 Hz can be realized.

The arc welding device 100 according to the present configuration employs, as the drive source for the rocker drive unit 25, the rocker drive motor 41 that is separate from the wire feed motor 15. In such a case, the frequency of the reciprocating motion of the welding wire 13 is changeable arbitrarily, regardless of the speed of wire feed. Specifically, while the speed of wire feed, or the welding current, is set to a constant value, the degree of freedom in changing the frequency at which the welding wire 13 is caused to reciprocate is improved. For example, if the frequency of the reciprocating motion is increased, the number of times the distal end of the welding wire 13 is transformed into a droplet is increased. Accordingly, the size of the droplet to be formed at a time can be reduced. Consequently, welding with small beads and at a high welding speed is realized. In contrast, if the frequency of the reciprocating motion is reduced, the number of times of transformation into a droplet is reduced. Consequently, spatters that may increase with the number of times of transformation into a droplet can be reduced. Thus, the number of options for desired welding performance to be taken is increased.

### <Second Exemplary Configuration>

An arc welding device according to a second exemplary configuration will now be described. In the following description, elements that are the same as those described above are denoted by the same reference numerals, respectively, and description of such elements is omitted or simplified.

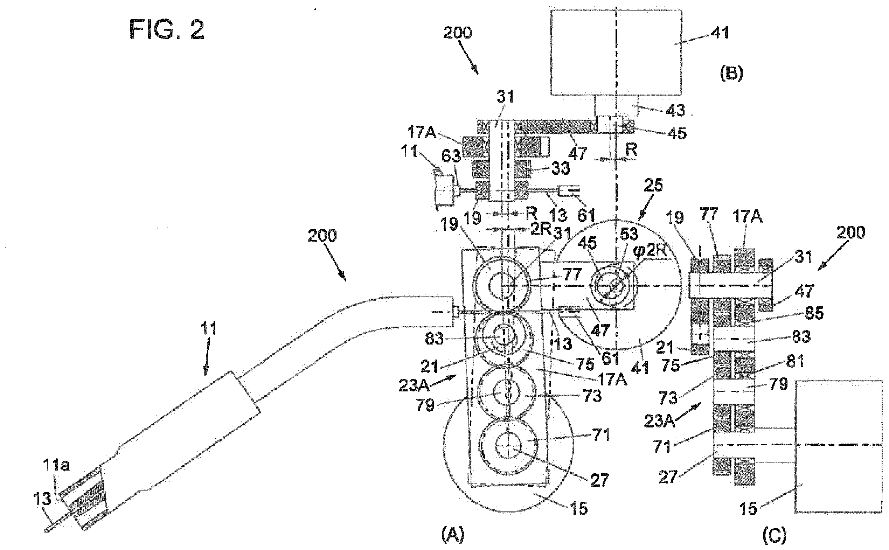

Fig. 2 is a diagram of an arc welding device according to the second exemplary configuration, including part (A) as a front view illustrating relevant elements of the arc welding device, part (B) as a partially sectional top view of the arc welding device illustrated in part (A), and part (C) as a side view of the arc welding device illustrated in part (A).

A rotation transmitting mechanism 23A according to the present configuration employs, in replacement of the above belt transmission mechanism, a gear transmission mechanism that transmits the rotation of the wire feed motor 15 to the rotating shaft 31 of the wire feed roller 19 through a gear train.

The rotation transmitting mechanism 23A includes a first gear 71 fixed to the output shaft 27, a second gear 73 that is in mesh with the first gear 71, a third gear 75 that is in mesh with the second gear 73, and a fourth gear 77 that is in mesh with the third gear 75 and is fixed to the rotating shaft 31.

The second gear 73 is fixed to a rotating shaft 79. The rotating shaft 79 is supported rotatably on a rocker arm 17A with the aid of a bearing 81. The third gear 75 is fixed to a rotating shaft 83. The rotating shaft 83 is supported rotatably on the rocker arm 17 with the aid of a bearing 85.

In the rotation transmitting mechanism 23A configured as above, the rotation of the wire feed motor 15 is transmitted to the rotating shaft 31 through the first gear 71, the second gear 73, the third gear 75, and the fourth gear 77. Therefore, the wire feed roller 19 is rotated at the ratio of speed of rotation between the output shaft 27 and the rotating shaft 31 that is highly accurately set on the basis of the gear ratio of the gear train. In the present configuration, the gear train is employed, and the gear ratio does not change with age. Other advantageous effects are the same as those obtained in the first exemplary configuration.

### <Third Exemplary Configuration>

An arc welding device according to a third exemplary configuration will now be described.

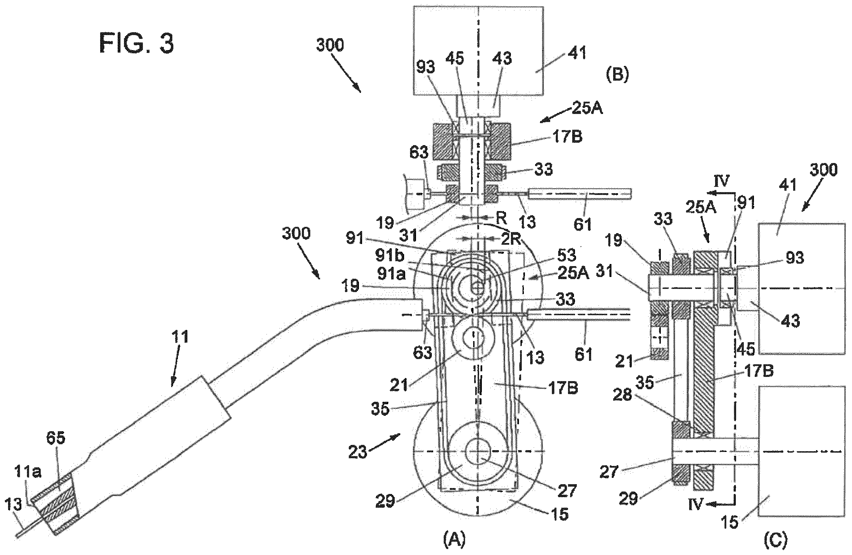

Fig. 3 is a diagram of an arc welding device according to the third exemplary configuration, including part (A) as a front view illustrating relevant elements of the arc welding device, part (B) as a partially sectional top view of the arc welding device illustrated in part (A), and part (C) as a side view of the arc welding device illustrated in part (A).

A rocker drive unit 25A according to the present configuration employs, in replacement of the rocker drive arm 47 of the rocker drive unit 25 employed in the first exemplary configuration, an oblong groove portion 91 extending in an arm longitudinal direction of a rocker arm 17B and in which the eccentric shaft 45 is guided.

The eccentric shaft 45 is coupled to the output shaft 43 of the rocker drive motor 41 with an eccentricity R. When the rocker drive motor 41 rotates, the axis of the eccentric shaft 45 undergoes a circular motion along a locus 53.

The rocker arm 17B has the oblong groove portion 91 at one end thereof having the pair of wire feed rollers 19 and 21. The oblong groove portion 91 extends in the arm longitudinal direction from the one end toward the other end of the rocker arm 17B. The oblong groove portion 91 has a pair of parallel groove walls 91a and 91b that are opposite each other. A bearing 93 fixed to the eccentric shaft 45 is fitted in the oblong groove portion 91. The eccentric shaft 45 is rotated with the outer peripheral surface of the bearing 93 being in contact with the groove walls 91a and 91b.

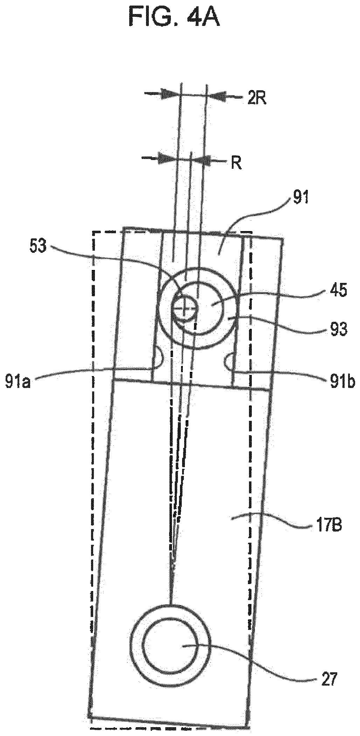

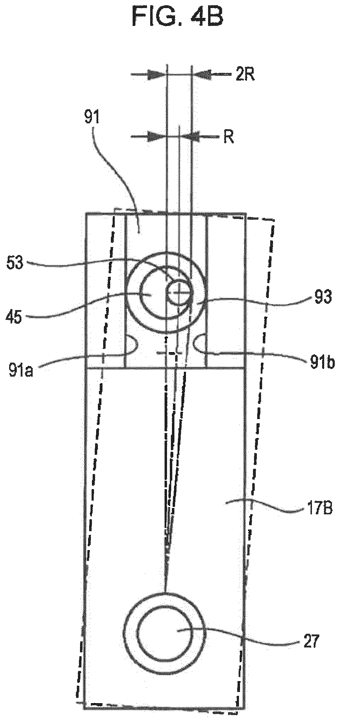

Specifically, as illustrated in sectional views in Figs. 4A and 4B that are taken along line IV-IV and seen on arrows illustrated in part (C) of Fig. 3, the groove walls 91a and 91b of the oblong groove portion 91 are in contact with the outer peripheral surface of the bearing 93 attached to the eccentric shaft 45, whereby the rocker arm 17B receives a force acting in the lateral direction in the drawings.

More specifically, when the eccentric shaft 45 rotates, the axis of the bearing 93 undergoes a circular motion within the oblong groove portion 91 along the locus 53. Accordingly, the rocker arm 17B receives a force transmitted from the bearing 93 and acting in the width direction that is orthogonal to the arm longitudinal direction. With the widthwise force, the rocker arm 17B is rocked on the output shaft 27. Meanwhile, a force transmitted from the bearing 93 and acting in the arm longitudinal direction is absorbed by the oblong groove portion 91 and is therefore not transmitted to the rocker arm 17B. Hence, the rocker arm 17B rocks along an almost linear, gentle arc-shaped locus centered at the output shaft 27. Accordingly, the pair of wire feed rollers 19 and 21 supported by the rocker arm 17B also rock along a gentle arc-shaped locus.

With the rocker drive unit 25A configured as above, the rocker drive arm 47 employed in the second exemplary configuration is not necessary. Therefore, the number of components forming the rocker drive unit 25A is reduced. Consequently, a space-efficient, more compact configuration is realized. Other advantageous effects are the same as those obtained in the first or second exemplary configuration.

### <Fourth Exemplary Configuration>

An arc welding device according to a fourth exemplary configuration will now be described.

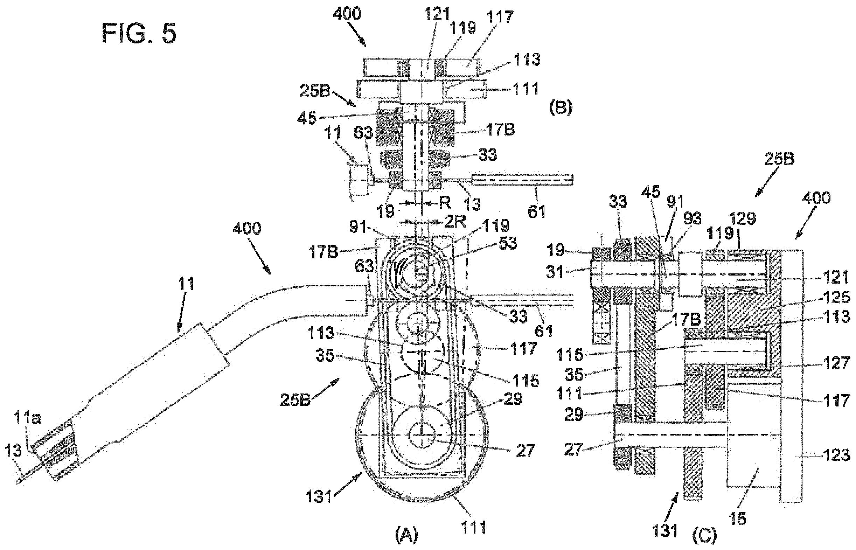

Fig. 5 is a diagram of an arc welding device according to the fourth exemplary configuration, including part (A) as a front view illustrating relevant elements of the arc welding device, part (B) as a partially sectional top view of the arc welding device illustrated in part (A), and part (C) as a side view of the arc welding device illustrated in part (A).

An arc welding device 400 according to the present configuration employs, in replacement of the rocker drive unit 25A employed in the third exemplary configuration, a rocker drive unit 25B that rocks the rocker arm 17B by the use of the wire feed motor 15 and without the rocker drive motor 41.

The rocker drive unit 25B includes a first gear 111 fixed to the output shaft 27 of the wire feed motor 15, a second gear 113 that is in mesh with the first gear 111, a rotating shaft 115 to which the second gear 113 is fixed, a third gear 117 fixed coaxially to the rotating shaft 115, and a fourth gear 119 that is in mesh with the third gear 117 and is fixed to a rotating shaft 121. The rotating shaft 121 is connected to the eccentric shaft 45.

The rotating shafts 115 and 121 are rotatably supported by a housing 125 with the aid of respective bearings 127 and 129. The housing 125 is fixed to a bracket 123 that supports the wire feed motor 15. The first gear 111, the second gear 113, the third gear 117, the fourth gear 119, the output shaft 27, and the rotating shafts 115 and 121 altogether form a gearbox 131 that changes the speed of rotation of the output shaft 27 of the wire feed motor 15.

With the rocker drive unit 25B configured as above, the rotation of the output shaft 27 of the wire feed motor 15 is transmitted to the rotating shaft 121 through the gearbox 131, whereby the eccentric shaft 45 is rotated. The gear ratio of the gearbox 131 is set such that the rotating shaft 121 rotates at a speed that is the same as the speed of rotation of the eccentric shaft 45 of the rocker drive unit 25. In general, the speed of rotation of the rotating shaft 121 that causes the welding wire 13 to reciprocate by rocking is higher than the speed of rotation of the wire feed roller 19. Therefore, the gear ratio of the gearbox 131 is set in such a manner as to increase the speed. The gear ratio, which will be described in detail below, is set such that the relationship between the speed of wire feed and the frequency of wire reciprocation matches with a desired purpose.

Thus, the rocker drive unit 25B can rotate the wire feed roller 19 and rock the rocker arm 17B simultaneously by using only one wire feed motor 15. Since the feeding of the welding wire 13 and the rocking of the rocker arm 17B are performed with one motor, the size, the weight, and the cost of the device can be reduced, compared with a case where two motors are employed.

Furthermore, since only one motor is provided, the frequency of reciprocation of the welding wire 13 is proportional to the speed of wire feed. Consequently, appropriate welding is realized as to be described below, and the control operation can be simplified as to be described below.

Specifically, since the frequency of reciprocation of the welding wire 13 is proportional to the speed of wire feed, the length of wire feed per rocking period is constant. Accordingly, the size of the droplet that is formed per period is constant. For example, if the speed of wire feed is 8 m/min with the frequency being set to 100 Hz, the length of wire feed per period is supposed to be 1.33 mm. If the speed of wire feed is 4 m/min, the frequency becomes 50 Hz, whereas the length of wire feed is still 1.33 mm, the same as the foregoing case.

In pulsation welding intended for general purposes as well, droplet is formed by the use of pulsation at a frequency proportional to the speed of wire feed so that droplets to be formed can be made uniform. In this respect, the rocker drive unit 25B according to the present configuration can improve welding stability practically and rationally.

In the case where two motors are used, a synchronous control operation is necessary in which the speed of rotation of the drive motor for wire reciprocation is matched with the speed of wire feed. However, in the above single-motor scheme, the control operation of matching the speed of rotation is not necessary. Hence, the welding control operation is not complicated.

### <Fifth Exemplary Configuration>

An arc welding device according to a fifth exemplary configuration will now be described.

In general, to incorporate a wire feeder into a welding robot or the like, the wire feeder and a wire spool or a wire pack are spaced apart from each other by about 3 to 6 m. In the area between the two, the welding wire advances through the inside of a conduit liner having a compression-spring structure. A case where the above-described frequency of welding-wire reciprocation is 100 Hz and the stroke 2R is 6 mm corresponds to a case where the welding wire that is reciprocating advances through the inside of the conduit liner at a speed of wire feed of 72 m/min. That is, the welding wire and the conduit liner come into relative contact with each other at a speed that is eight times the speed of wire feed of 8 m/min, or sixteen times the speed of wire feed of 4 m/min. Therefore, the amount of wear of the conduit liner inevitably increases. Moreover, since the welding wire comes into contact with the conduit liner, there is a significantly adverse influence such as scars on the surface of the welding wire, particularly, damage to the copper plate provided over the wire surface. Such damage may reduce welding stability or cause clogging of the conduit liner.

If the welding wire reciprocates a hundred times per second in the area that is as long as 3 to 6 m with the rocking motion of the rocker arm, an adverse influence of the frictional resistance between the welding wire and the conduit liner upon the load applied to the drive motor that causes the welding wire to reciprocate cannot be ignored.

Hence, an arc welding device 500 according to the present configuration employs a disc-shaped rotatable body 135 around which the welding wire 13 is wound, whereby the occurrence of friction between the welding wire and the first conduit liner 61 with the rocking of the rocker arm is prevented.

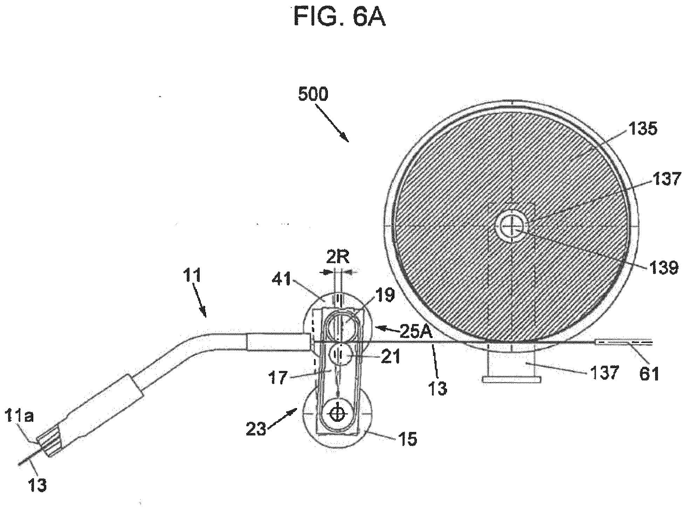

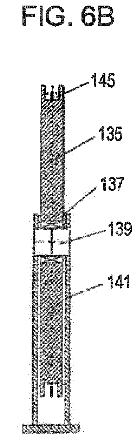

Fig. 6A is a front view of relevant elements included in the arc welding device 500 according to the fifth exemplary configuration. Fig. 6B is a sectional view of the disc-shaped rotatable body 135 and a bracket 141 illustrated in Fig. 6A.

The arc welding device 500 according to the present configuration includes the rotation transmitting mechanism 23 and the rocker drive unit 25A that are employed in the third exemplary configuration, and the disc-shaped rotatable body 135 provided on the upstream side with respect to the pair of wire feed rollers 19 and 21 in the direction of welding-wire feed and rotatably supported by the bracket 141.

The disc-shaped rotatable body 135 is supported rotatably on a shaft 139 with the aid of a bearing 137. The bracket 141 fixes the shaft 139 and supports the disc-shaped rotatable body 135 rotatably thereon.

The disc-shaped rotatable body 135 is positioned between an end of the first conduit liner 61 that is nearer to the wire feed rollers 19 and 21 and the wire feed rollers 19 and 21.

The welding wire 13 is fed from the end of the first conduit liner 61, runs along an outer peripheral groove 145 in the outer periphery of the disc-shaped rotatable body 135 in such a manner as to make at least one turn therearound, and is nipped between the pair of wire feed rollers 19 and 21. The welding wire 13 thus nipped between the pair of wire feed rollers 19 and 21 advances through the welding torch 11 and is guided to the torch tip 11a. That is, in an area between the first conduit liner 61 and the inlet of the welding torch 11, the welding wire 13 is not covered with the first conduit liner 61.

Here, suppose that the pair of wire feed rollers 19 and 21 having gripped the welding wire 13 causes the welding wire 13 to reciprocate by the stroke 2R with the rocking of the rocker arm 17B. For example, if the stroke is 6 mm, the frequency of reciprocation is 100 Hz, and the speed of wire feed is 8 m/min, the welding wire 13 moves backward by 5.3 mm during its backward movement. A force that moves the welding wire 13 backward by 5.3 mm is smaller than a force that causes the welding wire 13 to be inserted into the first conduit liner 61, because the welding wire 13 runs around the disc-shaped rotatable body 135.

Hence, the welding wire 13 thus moved backward comes to have some play in the outer peripheral groove 145 of the disc-shaped rotatable body 135, without being inserted into the first conduit liner 61. The amount of play corresponds to a slight increase in the diameter by about 1.7 mm, regardless of the diameter of the disc-shaped rotatable body 135. Practically, to make the plastic deformation of the wire very small, the diameter of the disc-shaped rotatable body is desired to be 200 mm to 300 mm.

In a period in which the welding wire 13 is moved forward in the direction of wire feed, the disc-shaped rotatable body 135 starts to rotate after the play is eliminated with the pulling of the welding wire 13. When the disc-shaped rotatable body 135 starts to rotate, a force that pulls the welding wire 13 out of the first conduit liner 61 acts on the welding wire 13, and the welding wire 13 continues to move forward.

In such a manner, even after the rocker arm 17B is rocked, the welding wire 13 moves in the first conduit liner 61 at a relative speed that is the same as the speed of wire feed, on average, without moving backward in the first conduit liner 61. Hence, the wear of the first conduit liner 61 and the damage to the welding wire 13 can be prevented, and the loads to be applied to the wire feed motor 15 and the rocker drive motor 41 can be reduced.

### <Sixth Exemplary Configuration>

An arc welding device according to a sixth exemplary configuration will now be described.

In the description of the above fifth exemplary configuration, it has been described that the problem attributed to the contact between the welding wire 13 and the first conduit liner 61 can be solved even if the welding wire 13 is caused to reciprocate in the direction of wire feed at a high speed corresponding to a frequency of 100 Hz. The problem also totally applies to the relationship between the second conduit liner 63 provided over a portion extending from the wire feed roller 19 to the contact tip 65 and the welding wire 13, except that the length of the second conduit liner 63 is about 300 to 1000 mm and is shorter than the first conduit liner 61.

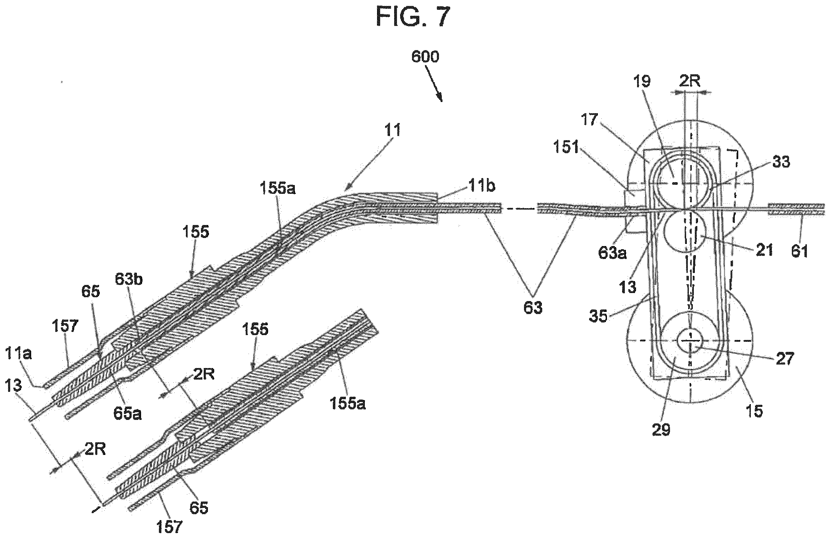

Hence, the present configuration prevents the occurrence of the problem attributed to the contact between the first conduit liner 61 and the welding wire 13. Fig. 7 is a diagram illustrating relevant elements of an arc welding device 600 according to the sixth exemplary configuration.

An end 63a of the second conduit liner 63 that is on the upstream side in the direction of wire feed is fixed to the rocker arm 17 with the aid of an attachment 151. An end 63b of the second conduit liner 63 that is on the downstream side in the direction of wire feed is positioned near the contact tip 65 provided in the welding torch 11.

The welding torch 11 includes a torch body 155, the contact tip 65 fixed at the distal end of the torch body 155, and a cylindrical shield nozzle 157 provided around the contact tip 65 with a gap interposed therebetween. One end of the shield nozzle 157 is fixed to the outer periphery at the distal end of the torch body 155 with an insulating material, not illustrated, interposed therebetween.

The torch body 155 has a liner insertion hole 155a extending therethrough over the entire length thereof. The second conduit liner 63 inserted into the liner insertion hole 155a is allowed to move therein. The contact tip 65 has a wire insertion hole 65a extending therethrough in the axial direction. The contact tip 65 holds the welding wire 13 inserted into the wire insertion hole 65a. The contact tip 65 is made of an electrically conductive member. The welding wire 13 projecting from the end of the second conduit liner 63 that is on the downstream side in the direction of wire feed is inserted into the wire insertion hole 65a of the contact tip 65.

In the welding torch 11, the second conduit liner 63 is guided slidably on the torch body 155. The drawing also illustrates how the welding wire 13 projecting from the contact tip 65 reciprocates by the stroke 2R with the reciprocation of the second conduit liner 63 by the stroke 2R.

In the above configuration, when the rocker arm 17 rocks, the welding wire 13 and the second conduit liner 63 together reciprocate at the same speed. That is, the relative speed of reciprocation of the welding wire 13 and the second conduit liner 63 with respect to each other with the rocking of the rocker arm 17 is zero, and the relative speed of the two contains only the speed of wire feed for typical welding. Hence, according to the present configuration, the problem attributed to the high-speed contact between the welding wire 13 and the second conduit liner 63 can be eliminated.

If the distance from the pair of wire feed rollers 19 and 21 to a liner inlet 11b from which the second conduit liner 63 is inserted into the welding torch 11 is long, it is desirable to provide a guide, not illustrated, at a position between the pair of wire feed rollers 19 and 21 and the liner inlet 11b so that the second conduit liner 63 is guided slidably.

### <Seventh Exemplary Configuration>

An arc welding device according to a seventh exemplary configuration will now be described.

The contact tip 65 is a component for supplying a welding current to the welding wire 13. Any contact failure of the contact tip 65 due to wear or the like brings significantly adverse influence upon welding stability. Despite such circumstances, the contact tip 65 causes mechanical wear with the reciprocation of the welding wire 13 or melting wear with heat generated by electrification with a pulsating welding current. The wear of the contact tip 65 progresses with the combination of mechanical wear and melting wear. Therefore, it is not preferable to perform welding while moving the welding wire 13 back and forth.

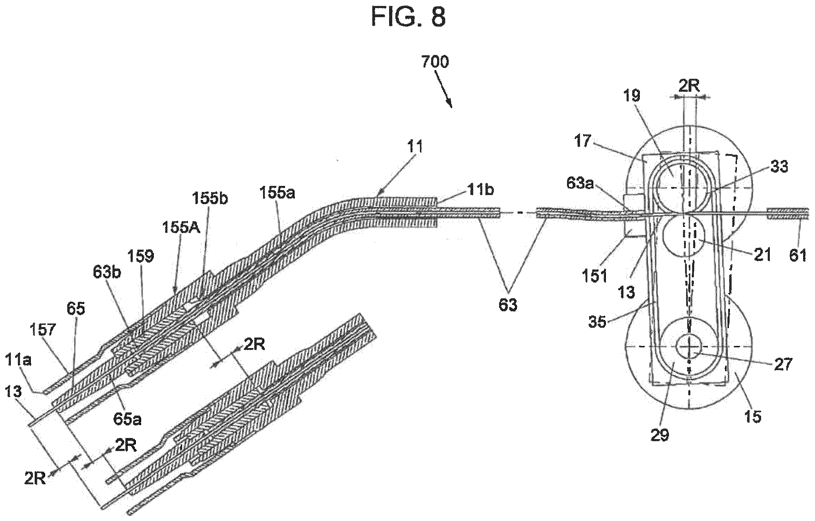

Hence, in the arc welding device according to the present configuration, the occurrence of mechanical wear and melting wear is prevented as described below. Fig. 8 is a diagram illustrating relevant elements of an arc welding device 700 according to the seventh exemplary configuration.

The welding torch 11 included in the arc welding device 700 according to the present configuration includes a torch body 155A, the contact tip 65 provided at the distal end of the torch body 155A, and the cylindrical shield nozzle 157 provided around the contact tip 65 with a gap interposed therebetween. One end of the shield nozzle 157 is fixed to the outer periphery at the distal end of the torch body 155A with an insulating material, not illustrated, interposed therebetween.

An end of the contact tip 65 that is opposite the torch tip 11a is fitted in the inner periphery of a cylindrical electrifying member 159. The torch body 155A has a receiving hole 155b at a distal portion thereof. The receiving hole 155b communicates with the liner insertion hole 155a. The electrifying member 159 is fitted in the receiving hole 155b slidably on the torch body 155A. The electrifying member 159 is electrically connected to the torch body 155A. A welding current flows from the torch body 155A to the contact tip 65 via the sliding part of the electrifying member 159. To extend the life of the sliding part of the electrifying member 159 in the receiving hole 155b, a welding-current path may be provided by connecting the electrifying member 159 and the torch body 155A to each other with a linear bearing, not illustrated, while connecting the torch body 155A and the electrifying member 159 to each other with a flexible braided copper wire, not illustrated.

The electrifying member 159 is connected to the end 63b of the second conduit liner 63 that is on the downstream side in the direction of wire feed. The end 63a of the second conduit liner 63 that is on the upstream side in the direction of wire feed is fixed to the rocker arm 17 with the aid of the attachment 151. The drawing also illustrates how the welding wire 13 projecting from the contact tip 65 moves by the stroke 2R with the movements of the second conduit liner 63, the electrifying member 159, and the contact tip 65 by the stroke 2R.

In the above configuration, when the rocker arm 17 rocks, the welding wire 13, the second conduit liner 63, the electrifying member 159, and the contact tip 65 altogether reciprocate at the same speed. That is, the relative speed of reciprocation of the welding wire 13, the second conduit liner 63, and the contact tip 65 with respect to one another with the rocking of the rocker arm 17 is zero, and the relative speed of each of the second conduit liner 63 and the contact tip 65 with respect to the welding wire 13 contains only the speed of wire feed for typical welding. Therefore, the wear of the contact tip 65 can be suppressed to a level equivalent to that occurring in typical welding in which the wire does not reciprocate.

Instead of the above configuration, the electrifying member 159 may be omitted such that the contact tip 65 slides in the receiving hole 155b of the torch body 155A.

### <Eighth Exemplary Configuration>

An arc welding device according to an eighth exemplary configuration will now be described. Exemplary operations of controlling the welding current to be described below are each realized by controlling a welding power supply unit and using the mechanism of feeding the welding wire 13, the rocker drive unit 25, 25A, or 25B, and the rotation transmitting mechanism 23 or 23A that are included in the arc welding device 100, 200, 300, 400, 500, 600, or 700.

### (First Exemplary Control Operation)

As described in "Waveform Control in Gas Shielded Arc Welding": Journal of the Japan Welding Society, vol. 57, No. 7 (1988), spatters generated in a gas shielded arc welding method accompanied by shorting basically depends on the level of the welding current generated at the time of shorting and at the time of rearcing. This also influences gas shielded arc welding accompanied by shorting caused by the reciprocation of the welding wire.

In a prior-art method, application of a high short-circuit current is inevitable to open a short circuit. However, if the wire is caused to reciprocate as in the present configuration, that is, if the welding wire is lifted from a molten pool, the short circuit can be opened easily. Accordingly, no high short-circuit current is necessary, and the short circuit can be opened even if the welding current is lowered before the short circuit is opened.

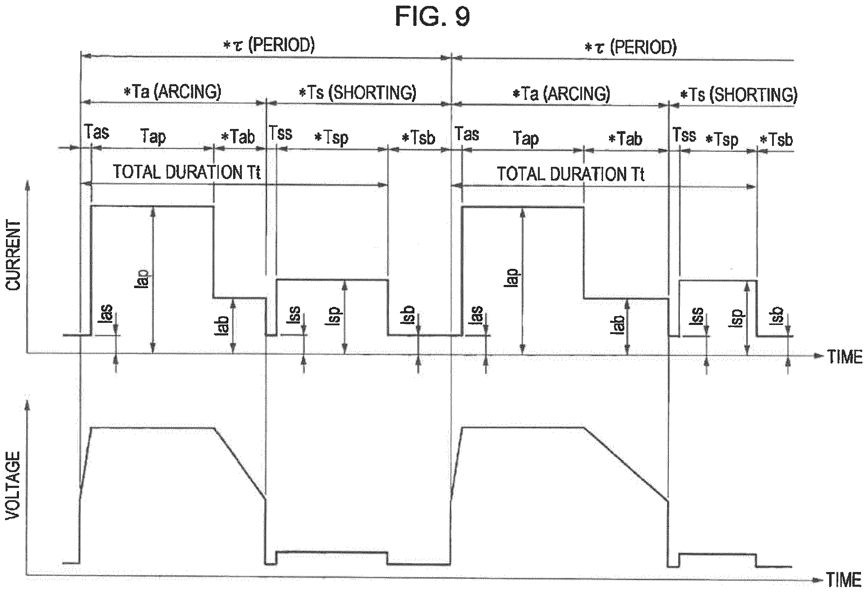

Fig. 9 is a timing chart illustrating the welding current and the welding voltage.

To minimize spatters by utilizing the reciprocating motion of the welding wire, the welding current and the welding voltage are preferably set to follow respective waveform patterns illustrated in Fig. 9.

Specifically, when a short circuit is opened and an arc is generated, a low current las for suppressing the arc energy immediately after the arc generation is outputted for a duration Tas (a first term).

Subsequently, an arcing-duration pulsed current lap for forming a droplet is outputted for a duration Tap (a second term).

Subsequently, a base current Iab that is lower than the arcing-duration pulsed current lap is outputted until a short circuit occurs (a third term).

After the short circuit occurs, a low current Iss that prevents the breakage of a microscopic bond between the distal end of the wire and the molten pool is outputted for a duration Tss (a fourth term).

Subsequently, a shorting-duration pulsed current Isp that is higher than the low current Iss is outputted. This state is maintained until a total duration Tt measured from the generation of the arc, or the total duration Tt measured from the beginning of the first term, reaches 70 to 95% of a rocking period τ (a fifth term).

Subsequently, a short-circuit base current Isb is outputted until an arc is generated (a sixth term).

The welding current is outputted in a cycle of the above first to sixth terms. With the sequential supply of such a welding current, the welding current can be minimized in each of situations where spatters are most likely to be generated, specifically, at the occurrence of a short circuit, at the generation of an arc, and immediately after the generation of an arc. Thus, spatters can be reduced.

The levels of the respective currents including Iap are all preset values. Among the durations named above, only Tas, Tap, and Tss are fixed values, whereas the other durations are all variable with the state of welding. The variable durations are each denoted with "*" in Fig. 9. The end time of Tsp, or the start time of Tsb, is calculated from the rocking period τ with which the reciprocating motion of the wire is set, and is therefore defined as a fixed time starting from the time when an arc is generated.

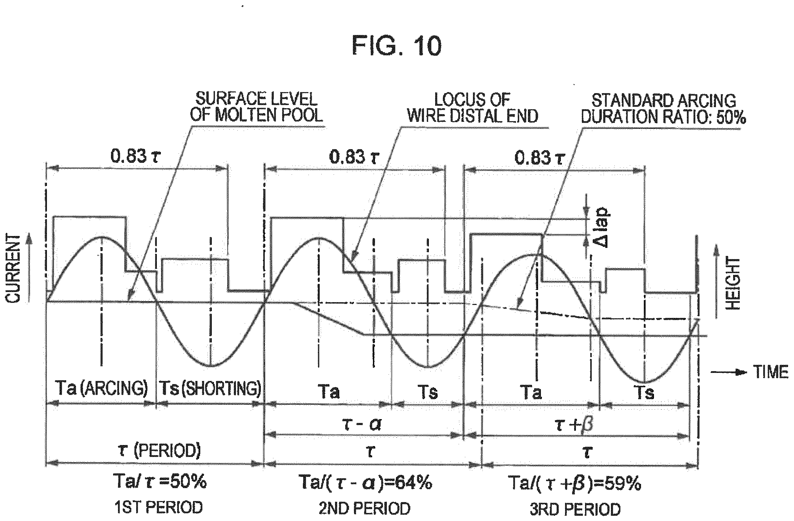

Since the total duration Tt from the first term to the end time of Tsp, or the start time of Tsb, is set to 70 to 95% of the rocking period τ that is set forth for wire reciprocation, spatters generated at the time of rearcing can be reduced stably. Such a situation will now be described with reference to Fig. 10.

As illustrated in Fig. 10, in a first period, there is no change in the surface of the molten pool. In a second period, the surface of the molten pool fluctuates, causing a delay in the occurrence of a short circuit. Consequently, the duration Tab illustrated in Fig. 9 is extended. Therefore, an arcing duration Ta is extended. Accordingly, in a shorting duration, the length by which the distal end of the welding wire is dipped into the molten pool is reduced. Therefore, the shorting duration Ts is reduced. The period of vertical reciprocation of the welding wire is also reduced by α from the set rocking period τ. Therefore, the time at arc generation is advanced. Even if any of Ta, Ts, and τ changes and the time at arc generation therefore changes, the term Tsb, or the term for reducing spatters, can be set to a term for generating an arc with the short-circuit base current Isb, by setting the end time of Tsp or the star time of Tsb illustrated in Fig. 9 to 83% of the set rocking period τ (0.83τ).

As a countermeasure for disturbances such as fluctuations of the molten pool, the total duration Tt from the first term to the end time of Tsp or the start time of Tsb is set to 70% of the rocking period τ, whereby an arc can be assuredly generated in the term Tsb. Instead, Tsp is reduced, which need to be compensated for by another current. Therefore, 70% is not necessarily the best. In contrast, if the total duration Tt exceeds 95% of the rocking period τ, an arc is generated during the application of a shorting-duration pulsed current Isp that is of high level, or during the term Tsp, because of disturbances in the molten pool or the like. In such a situation, spatters may increase. Hence, it is desired to choose an appropriate option according to need. Preferably, the total duration Tt may be set to 80 to 85% of the set rocking period τ.

The frequency of reciprocation of the welding wire is determined by the speed of rotation of the rocker drive motor 41 illustrated in, for example, part (B) of Fig. 1. In the case where the feeding of the welding wire 13 and the rocking are both realized by the wire feed motor 15 illustrated in part (C) of Fig. 5, the frequency of reciprocation is determined when the speed of wire feed is set. With reference to the frequency of reciprocation, the rocking period τ is determined uniquely. On the basis of the rocking period τ, the end time of Tsp (the start time of Tsb) is set. Hence, the detection of phase angle and the calculation of the end time of Tsp are not necessary, and the control operation is therefore simplified. Compared with a prior-art configuration in which the end time of Tsp is calculated from the phase angle of the rocker drive motor at the time of arc generation, the present configuration requires neither an encoder for outputting the phase angle of the rocker drive motor nor communication means and cables thereof. Thus, a low-cost, simple configuration is provided.

### (Second Exemplary Control Operation)

A second exemplary control operation performed by the arc welding device will now be described.

In the present exemplary control operation, as in the case of the arc welding device 400 illustrated in Fig. 5, a welding wire is fed at a constant speed by using a general-purpose motor, and the welding wire is mechanically caused to reciprocate by the general-purpose motor. Furthermore, both the feeding and the reciprocation of the welding wire are realized with one motor. In such a control operation, the reciprocating motion of the welding wire is unique. Therefore, an operation of controlling the arc length for stable welding can be realized by controlling only the welding current. A control operation of compensating for changes in the arc length that are caused by changes in the melting speed due to changes in the length of projection of the welding wire, and changes in the arc length that are caused by disturbances such as fluctuations of the molten pool is as follows.

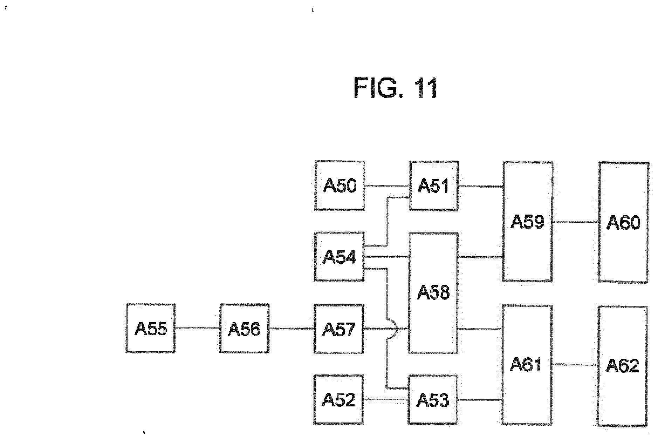

Details of the present exemplary control operation will now be described with reference to Fig. 11, which is a control block diagram of the arc welding device.

The currents Iap, lab, and Isp illustrated in Fig. 9 referred to above are determined in accordance with the speed of wire feed. Specifically, in response to an output from a wire-feeding-speed setter A50 having a function corresponding to a prior-art welding-current setter, a welding-current setter A51 calculates values of the above currents that are set in accordance with the speed of wire feed.

A current-duration setter A53 receives an output from a rocking-speed setter A52, which sets the rocking period τ corresponding to the frequency of rocking, and calculates current durations such as Tap and the like.

An arcing-duration-ratio setter A54 corresponds to a prior-art welding-voltage setter and is responsible for the setting of the arc length. A voltage detector A55 detects the voltage applied across the welding wire and a base metal. A signal thus detected is inputted to an arcing/shorting determiner A56 that determines which of arcing or shorting is occurring. An arcing-duration-ratio calculator A57 receives a signal outputted from the arcing/shorting determiner A56 and calculates an arcing duration ratio K = Ta/(Ta+Ts) per period. An error amplifier A58 receives the signals outputted from the arcing-duration-ratio setter A54 and the arcing-duration-ratio calculator A57 and outputs current deviations ΔIap, ΔIab, and ΔIsp, and a duration deviation ΔTap of lap in accordance with the error between the calculated arcing duration ratio K and the preset arcing duration ratio.

The output of the welding-current setter A51 and the output of the error amplifier A58 are inputted to an adder A59. The adder A59 outputs a signal generated by adding the two values inputted thereto to a current controller A60. The current controller A60 thus received the signal from the adder A59 controls the welding current.

The output of the current-duration setter A53 and the output of the error amplifier A58 are inputted to an adder A61. The adder A61 outputs a signal generated by adding the two values inputted thereto to a current-duration sequencer A62. The current-duration sequencer A62 thus received the signal from the adder A61 controls the current durations.

The above calculations are realized with software using a publicly known analog circuit or digital arithmetic unit.

The results of the above control operation are illustrated in Fig. 10 referred to above, in which the definitions of respective parameters are given in Fig. 9 and are omitted in Fig. 10.

In the second period illustrated in Fig. 10, the arc length was extended because of a fluctuation of the molten pool, and the arcing duration ratio increased from that of the first period, specifically, 50% to 64%. Since the arcing duration ratio increased, the error amplifier A58 (see Fig. 11) outputted -ΔIap. Consequently, in the third period, Iap-ΔIap, or the value of the current Iap, was reduced, and the amount of molten welding wire was reduced. In this case, the arcing duration ratio was reduced to 59%. Although not illustrated, the arcing duration ratio did not reach 50% in a fourth period. Therefore, in the fourth period as well, a current lower than the initial level continues to be supplied so that the arcing duration ratio is gradually made close to 50%.

While the above description concerns Iap, the same applies to a correction for reducing Iab, Isp, and Tap.

In contrast, if the arc length is reduced, the levels of the respective currents such as lap are controlled to be increased. Furthermore, Tap is also controlled to be increased. Thus, the arcing duration ratio, or the arc length, becomes the same as preset, whereby the influences of disturbances and the like are compensated for. Hence, stable arc welding is realized.

### (Third Exemplary Control Operation)

A third exemplary control operation performed by the arc welding device will now be described.

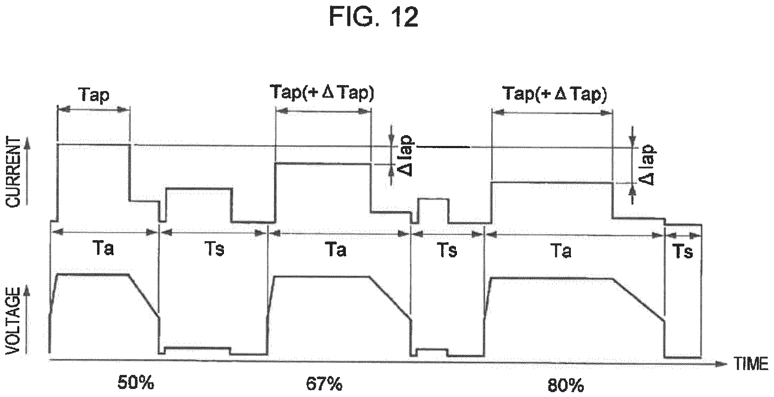

Referring to Fig. 11, the signal generated by the arcing-duration-ratio setter A54 is inputted to the current-duration setter A53 for relevant currents. Specifically, Tap is set as a function that increases with the increase in the setting of the arcing duration ratio. The subsequent steps of the control operation are the same as those of the second exemplary control operation. If a higher arcing duration ratio is set on the arcing-duration-ratio setter A54, Tap is extended as illustrated in Fig. 12. Accordingly, the arc length increases, and the arcing duration Ta increases. If the arcing duration Ta becomes too long, the arcing duration ratio is controlled in the reverse manner so as to be maintained at the set value as in the second exemplary control operation. In such a case, Iap is reduced to an appropriate level. If the set arcing duration ratio is further increased, referring to Fig. 12, lap changes as illustrated for an arcing duration ratio of 80%.

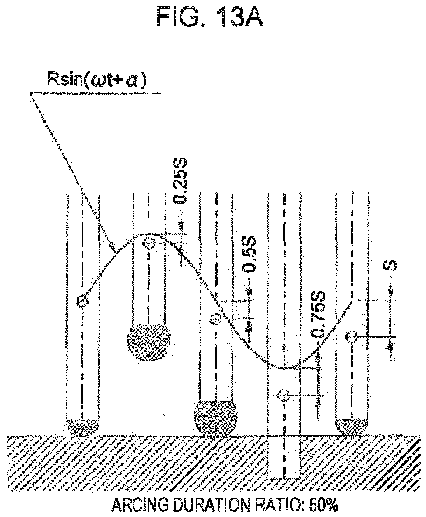

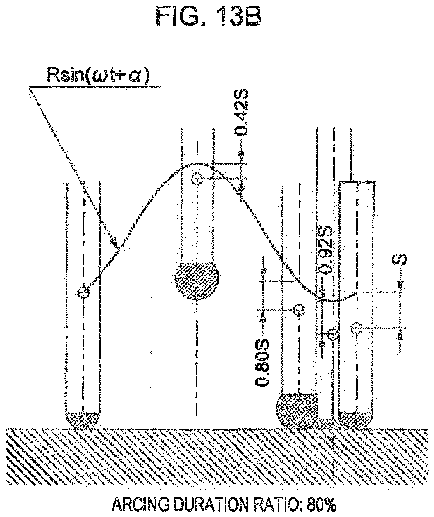

To summarize, changing the arcing duration ratio is extremely effective in controlling the shape of the weld bead. Figs. 13A and 13B schematically illustrate changes in the arc length. Referring to Fig. 13A, at an arcing duration ratio of 50% for a short arc length, the arc does not spread widely. Such a setting is effective for obtaining a thin bead. Referring to Fig. 13B, an arcing duration ratio of 80% for a long arc length is effective for obtaining a flat bead having a large bead width. Table 1 summarizes the results of an experiment that provides evidence for these effects. As summarized in Table 1, as the arcing duration ratio changes, the power to be supplied to the bead, or the amount of heat, changes with a difference of 1.4- to 1.6-fold, which shows that the bead shape is controllable in an extremely wide range. The arcing duration ratio is preferably changed within a range of 50 to 90%.

### [Table 1]

**Table 1: Power to be supplied to bead at speed of wire feed of 6 m/min (Shielding gas: Ar80%CO₂)**

| Arcing duration ratio % | 52 | 88 |
|---|---|---|
| Average current A | 227 | 218 |
| Average voltage V | 13.8 | 22.4 |
| Average power kW | 3.13 | 4.89 |
| Effective power kW | 3.71 | 5.34 |

| | | |
|---|---|---|
| Average power = average current × average voltage Effective power = unit-time integration of instantaneous current value × instantaneous voltage value | | |

### (Fourth Exemplary Control Operation)

A fourth exemplary control operation performed by the arc welding device will now be described.

Referring to Fig. 11, the signal generated by the arcing-duration-ratio setter A54 is inputted to the current-duration setter A53 for relevant currents and to each welding-current setter A51. When Iap, Iab, Tap, and Tab are changed in accordance with the thus set arcing duration ratio, the current-duration setter A53 for relevant currents and each welding-current setter A51 perform the respective calculations such that substantially the same IapxTap+IabxTab is obtained. If a high arcing duration ratio is set, Tap becomes large while Iap is set to a small value. This also applies to Tab and lab. Note that Tab changes with the state of welding as described above. Therefore, an averagely estimated Tab is determined, and Iab is then determined. The subsequent steps of the control operation are the same as those of the second exemplary control operation.

In the present exemplary control operation, lap and others are controlled to be changeable by the use of the function of the error amplifier A58 concerning the arcing duration ratio. In this control operation, Iap, Iab, Tap, and Tab that are suitable for a target arcing duration ratio are preset. Furthermore, since the function of the error amplifier A58 concerning the arcing duration ratio is used, a more stable and accurate operation of controlling the arcing duration ratio is realized.

### (Fifth Exemplary Control Operation)

A fifth exemplary control operation performed by the arc welding device will now be described.

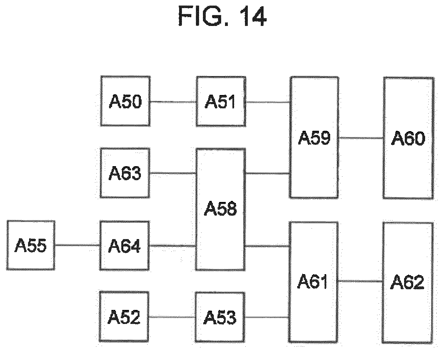

Details of the present exemplary control operation will be described with reference to a control block diagram illustrated in Fig. 14.

In the control block diagram illustrated in Fig. 14, the arcing-duration-ratio setter A54 in the control block diagram illustrated in Fig. 11 is replaced with a voltage setter A63, and the arcing/shorting determiner A56 and the arcing-duration-ratio calculator A57 are replaced with a voltage calculator A64. The other calculators are the same as those illustrated in Fig. 11 and are denoted by the same reference numerals, respectively.

The voltage setter A63 changes the arc length. To increase the arc length, the voltage setter A63 sets the voltage to a high value. The voltage calculator A64 has a function of calculating the average of voltages in one period in which shorting and arcing occur, a function of calculating the average of voltages only in the arcing duration, or a function of detecting the maximum voltage in the arcing duration.

The error amplifier A58 receives the inputs from the voltage setter A63 and the voltage calculator A64 and outputs current deviations ΔIap, ΔIab, and ΔIsp, and the duration deviation ΔTap of Iap in accordance with the error between the two, as in the second exemplary control operation. The subsequent steps performed by the relevant calculators are the same as those of the second exemplary control operation.

To summarize, in the present exemplary control operation, the welding power supply unit calculates any of the following: the average of voltages in one rocking period in which arcing and shorting occur, the average of arc voltages in the arcing duration, or the duration in which an arc is generated, and the maximum value of the arc voltages in the arcing duration. Then, in accordance with the difference between the calculated current value and the preset welding voltage, the welding power supply unit increases or decreases at least the arcing-duration pulsed current Iap among the arcing-duration pulsed current Iap, the base current Iab, the shorting-duration pulsed current Isp, and the duration Tap of the second term, thereby making the voltage value close to the set welding voltage.

The present exemplary control operation produces the same advantageous effects as those produced in the above second exemplary control operation.

As described above, with the present arc welding device, spatters can be reduced significantly by the use of general-purpose mechanical components, mechanical structures, and control means. Furthermore, the bead shape can be controlled. Therefore, an industrially extremely effective technique can be provided.

The present invention is not limited to the above embodiments. It is assumed in the present invention that features of the above embodiments may be combined together or be changed or applied by those skilled in the art on the basis of the description in this specification and known techniques, which are all encompassed in the scope of the claims.

To summarize, this specification discloses the following.
(1) An arc welding device that performs welding by generating an arc from a welding wire that is fed to a torch tip of a welding torch, the device comprising:
   a wire feed motor;
   a rocker arm attached rotatably on an output shaft of the wire feed motor;
   a pair of wire feed rollers attached rotatably on the rocker arm;
   a rotation transmitting mechanism that transmits rotation of the wire feed motor to the wire feed rollers;
   a rocker drive unit that rocks the rocker arm; and
   a welding power supply unit that supplies a welding current to the welding wire,
   wherein the pair of wire feed rollers are provided on an upstream side with respect to the torch tip in a direction of wire feed and nip in between the welding wire extending in a direction of rocking of the rocker arm, and
   wherein arcing and shorting are repeated at a distal end of the welding wire by feeding the welding wire toward the torch tip with the rotation of the wire feed rollers while causing the welding wire to reciprocate in the direction of wire feed with the rocking of the rocker arm.

In this arc welding device, since the welding wire is gripped by the pair of wire feed rollers that are rocked, the welding wire is caused to reciprocate. Thus, an assured and stable reciprocating motion of the welding wire can be realized. Furthermore, not the entirety of the wire feed motor is rocked but only the rocker arm, the rotation transmitting mechanism, and the wire feed rollers that are of light weight are rocked. Therefore, rocking requires less energy, and the capacity of the rocker drive motor can be reduced. Consequently, a high-speed reciprocating motion at a frequency of 100 Hz can also be realized.
(2) The arc welding device according to (1), wherein the rotation transmitting mechanism is a belt transmission mechanism that transmits the rotation of the wire feed motor to respective rotating shafts of the wire feed rollers through a belt.

In this arc welding device, a rotational force generated by the wire feed motor that is fixed can be transmitted to the wire feed rollers that are rocking. Hence, the wire feed rollers can be rocked without rocking the wire feed motor, which is of heavy weight.
(3) The arc welding device according to (1), wherein the rotation transmitting mechanism is a gear transmission mechanism that transmits the rotation of the wire feed motor to respective rotating shafts of the wire feed rollers through a gear train.

In this arc welding device, the ratio of rotation speed can be set with high accuracy on the basis of the gear ratio of the gear train. Moreover, the power can be transmitted with no changes with age.
(4) The arc welding device according to any of (1) to (3),
   wherein the rocker drive unit includes
   a rocker drive motor;
   an eccentric shaft that is rotated by the rocker drive motor and has an eccentric center of rotation; and
   a rocker drive arm one end of which is rotatably supported by the rocker arm and an other end of which is rotatably supported by the eccentric shaft.

In this arc welding device, the rocker arm can be caused to reciprocate in the direction of wire feed with the rotation of the eccentric shaft.
(5) The arc welding device according to any of (1) to (3),
   wherein the rocker drive unit includes
   a rocker drive motor;
   an eccentric shaft that is rotated by the rocker drive motor and has an eccentric center of rotation; and
   an oblong groove portion provided in the rocker arm in such a manner as to extend in an arm longitudinal direction, and in which the eccentric shaft is fitted, and
   wherein the eccentric shaft rocks the rocker arm by rotating in a groove of the oblong groove portion.

In this arc welding device, since the eccentric shaft rotates in the oblong groove portion provided in the rocker arm and thus directly rocks the rocker arm, the rocking mechanism is simplified. Consequently, the responsiveness to the rocking can be improved.
(6) The arc welding device according to (4) or (5), wherein the wire feed motor and the rocker drive motor are independent of each other.

In this arc welding device, the frequency of reciprocation of the welding wire can be selected, regardless of the speed of wire feed.
(7) The arc welding device according to (4) or (5), wherein one motor serves as both the rocker drive motor and the wire feed motor.

In this arc welding device, the frequency of reciprocation of the welding wire can be set to a value that is proportional to the wire-feeing speed, as in a typical pulsation welding. That is, the size of droplets to be formed per period in which arcing and shorting are repeated can be made uniform. Furthermore, since only one motor is necessary, the configuration of the device can be simplified.
(8) The arc welding device according to any of (1) to (7), further comprising:
   a first liner member that covers a portion of the welding wire that is to be fed toward the pair of wire feed rollers in such a manner as to be relatively movable on an outer side of the welding wire; and
   a rotatable body that is rotatably supported at a position between an end of the first liner member that is nearer to the wire feed rollers and the wire feed rollers, the rotatable body having an outer peripheral groove,
   wherein the welding wire is nipped between the pair of wire feed rollers after running along the outer peripheral groove of the rotatable body by at least one turn.

In this arc welding device, since the welding wire runs along the rotatable body by at least one turn, a slack in the welding wire that occurs when the welding wire moves backward during the reciprocation produces some play around the rotatable body and does not return to the inside of the first liner member. Hence, in the first liner member, the motion is produced only with the speed of wire feed, and the reciprocating motion of the welding wire with the rocking does not occur. Consequently, the friction loss between the welding wire and the first liner member is reduced, and the occurrence of scars on the wire surface can be suppressed.
(9) The arc welding device according to any of (1) to (8), further comprising:
   a second liner member provided on a downstream side with respect to the wire feed rollers in the direction of wire feed and that covers the welding wire in such a manner as to be relatively movable on an outer side of the welding wire,
   wherein the second liner member reciprocates along with the rocking of the rocker arm, with an end of the second liner member that is on the upstream side in the direction of wire feed being fixed to the rocker arm.

In this arc welding device, the second liner member undergoes the same reciprocating motion as that of the welding wire. Therefore, the relative motion of the welding wire in the second liner member is produced only with the speed of wire feed. Consequently, the friction loss between the welding wire and the second liner member is reduced, and the occurrence of scars on the wire surface can be suppressed.
(10) The arc welding device according to (9),
   wherein the welding torch includes
   a torch body having a liner insertion hole through which the second liner member movably extends;
   a contact tip having a wire insertion hole extending in an axial direction, the contact tip being fixed to a distal end of the torch body; and
   a cylindrical shield nozzle provided around an outer periphery of the contact tip with a gap provided in between, one end of the shield nozzle being fixed to the torch body with an insulating material provided in between, and
   wherein the welding wire covered with the second liner member extending through the liner insertion hole projects from an end of the second liner member that is on the downstream side in the direction of wire feed, and is inserted into the wire insertion hole.

In this arc welding device, the welding wire that is reciprocating is not regarded as moving relative to the second liner member but only moves at the speed of wire feed. Consequently, the friction loss with respect to the second liner member and the occurrence of scars on the welding wire can be suppressed.
(11) The arc welding device according to (9),
   wherein the welding torch includes
   a torch body having a liner insertion hole through which the second liner member movably extends;
   a contact tip having a wire insertion hole extending in an axial direction, the contact tip being provided at a distal portion of the torch body; and
   a cylindrical shield nozzle provided around an outer periphery of the contact tip with a gap provided in between, one end of the shield nozzle being fixed to the torch body with an insulating material provided in between,
   wherein the torch body has a receiving hole communicating with the liner insertion hole, and
   wherein the contact tip is reciprocatably received in the receiving hole such that the welding wire covered with the second liner member in the liner insertion hole projects from an end of the second liner member that is on the downstream side in the direction of wire feed, and is inserted into the wire insertion hole.

In this arc welding device, the welding wire that is reciprocating is not regarded as moving relative to the contact tip and the second liner member but only moves at the speed of wire feed. The reciprocating motion of the welding wire is supposed to cause wear with respect to the contact tip more than twice that occurring in typical welding. However, such wear can be reduced to about the same level as that of typical welding. Hence, the occurrence of wear of the contact tip, friction loss with respect to the second liner member, and scars on the welding wire can be suppressed.
(12) The arc welding device according to (11), further comprising:
   an electrically conductive member fixed to the end of the second liner member that is on the downstream side in the direction of wire feed, and provided slidably in the receiving hole,
   wherein the contact tip is fixed to the electrically conductive member.

In this arc welding device, the contact tip and the second liner member are received in the receiving hole with the electrically conductive member interposed therebetween. Hence, the contact tip and the second liner member are movable together. Accordingly, the occurrence of friction with the welding wire, scars or scrapes on the welding wire, and the like that may occur with the reciprocation of the welding wire can be reduced.
(13) An arc welding method in which welding is performed by generating an arc from a welding wire that is fed to a torch tip of a welding torch, the method comprising:
   feeding the welding wire nipped between a pair of wire feed rollers attached to a rocker arm that is rotatable on an output shaft of a wire feed motor to the torch tip by rotating the pair of wire feed rollers by a use of the wire feed motor; causing the welding wire to reciprocate in a direction of wire feed by rocking the rocker arm; and supplying a welding current to the welding wire from a welding power supply unit such that arcing and shorting are repeated at a distal end of the welding wire,
   wherein the welding power supply unit outputs the welding current in an output cycle including
      a first term in which a low current las is outputted after a short circuit is opened and an arc is generated;
      a second term in which an arcing-duration pulsed current lap that is higher than the low current Ias and is intended for generation of a droplet is outputted;
      a third term in which after the arcing-duration pulsed current lap is outputted, a base current lab that is lower than the arcing-duration pulsed current Iap is outputted until a short circuit occurs;
      a fourth term in which after the arc is extinguished, a low current Iss is outputted;
      a fifth term in which a shorting-duration pulsed current Isp that is higher than the low current Iss is outputted until a total duration Tt elapsed from a start of the first term reaches 70 to 95% of a rocking period τ of the rocker arm; and
      a sixth term in which a short-circuit base current Isb that is lower than the shorting-duration pulsed current Isp is outputted until another arc is generated.

In this arc welding method, with the sequential supply of the welding current to the welding wire, the welding current can be minimized in each of situations where spatters are most likely to be generated, specifically, immediately after the occurrence of a short circuit, at the generation of an arc, and immediately after the generation of an arc. Thus, spatters can be reduced.
(14) The arc welding method according to (13), wherein the welding power supply unit calculates an arcing duration ratio K = Ta/(Ta+Ts) from an arcing duration Ta in which an arc is generated and a shorting duration Ts in which the arc is extinguished in one rocking period; and, in accordance with a difference between the calculated arcing duration ratio K and a preset arcing duration ratio, the welding power supply unit increases or decreases at least the arcing-duration pulsed current Iap among the arcing-duration pulsed current Iap, the base current lab, the shorting-duration pulsed current Isp, and a duration Tap of the second term such that the arcing duration ratio K becomes close to the set arcing duration ratio.

In this arc welding method, the arc length is controlled such that the arcing duration ratio becomes the preset value. Thus, the arc length can be stabilized, and the amount of heat to be supplied to a welded part can be made constant, whereby stable arc welding can be performed. Consequently, highly uniform weld beads are obtained.
(15) The arc welding method according to (14), wherein the welding power supply unit changes the set value of the duration Tap of the second term in accordance with changes in a set value provided by an arcing-duration-ratio setter, and changes the arcing duration ratio within a range of 50 to 90%.

In this arc welding method, the amount of heat to be supplied to the welded part can be changed by 40 to 60%. That is, an amount of heat input that is suitable for a joint can be supplied selectively. Thus, the state of melting and the bead shape can be controlled.
(16) The arc welding method according to any of (13) to (15), wherein, in accordance with changes in a set value provided by an arcing-duration-ratio setter, the welding power supply unit changes respective set values of the arcing-duration pulsed current Iap, the base current Iab, the duration Tap of the second term, and a duration Tab of the third term such that a sum of a product of the arcing-duration pulsed current lap and the duration Tap of the second term and a product of the base current Iab and the duration Tab of the third term becomes a constant value.

In this arc welding method, the arc can be always assuredly stabilized at the set arcing duration ratio, and the bead shape can be controlled easily.
(17) The arc welding method according to any of (13) to (16), wherein the welding power supply unit calculates any of voltage values including an average of voltages in one rocking period in which arcing and shorting occur, an average of arc voltages in the arcing duration in which an arc is generated, and a maximum value of the arc voltages in the arcing duration; and, in accordance with a difference between the calculated voltage value and the preset welding voltage, the welding power supply unit increases or decreases at least the arcing-duration pulsed current Iap among the arcing-duration pulsed current Iap, the base current lab, the shorting-duration pulsed current Isp, and a duration Tap of the second term such that the voltage value becomes close to the set welding voltage.

In this arc welding method, the bead shape can be adjusted by controlling an average arc length.

The present application is based on a Japanese patent application (Japanese Patent Application No. 2016-80661) filed April 13, 2016, and the contents thereof is incorporated herein by reference.

### Reference Signs List

- 11: welding torch
- 11a: torch tip
- 13: welding wire
- 15: wire feed motor
- 17, 17A, 17B: rocker arm
- 19, 21: wire feed roller
- 23, 23A: rotation transmitting mechanism
- 25, 25A, 25B: rocker drive unit
- 27: output shaft
- 29, 33: pulley
- 31: rotating shaft
- 35: timing belt (belt)
- 41: rocker drive motor
- 43: output shaft
- 45: eccentric shaft
- 47: rocker drive arm
- 61: first conduit liner (first liner member)
- 63: second conduit liner (second liner member)
- 65: contact tip
- 65a: wire insertion hole
- 71: first gear
- 73: second gear
- 75: third gear
- 77: fourth gear
- 91: oblong groove portion
- 111: first gear
- 113: second gear
- 115: rotating shaft
- 117: third gear
- 119: fourth gear
- 121: rotating shaft
- 131: gearbox
- 135: disc-shaped rotatable body (rotatable body)
- 155, 155A: torch body
- 155a: liner insertion hole
- 155b: receiving hole
- 159: electrifying member
- 100, 200, 300, 400, 500, 600, 700: arc welding device

## Claims

1. An arc welding device that performs welding by generating an arc from a welding wire that is fed to a torch tip of a welding torch, the device comprising:
a wire feed motor;
a rocker arm attached rotatably on an output shaft of the wire feed motor;
a pair of wire feed rollers attached rotatably on the rocker arm;
a rotation transmitting mechanism that transmits rotation of the wire feed motor to the wire feed rollers;
a rocker drive unit that rocks the rocker arm; and
a welding power supply unit that supplies a welding current to the welding wire,
wherein the pair of wire feed rollers are provided on an upstream side with respect to the torch tip in a direction of wire feed and nip in between the welding wire extending in a direction of rocking of the rocker arm, and
wherein arcing and shorting are repeated at a distal end of the welding wire by feeding the welding wire toward the torch tip with the rotation of the wire feed rollers while causing the welding wire to reciprocate in the direction of wire feed with the rocking of the rocker arm.

2. The arc welding device according to Claim 1, wherein the rotation transmitting mechanism is a belt transmission mechanism that transmits the rotation of the wire feed motor to respective rotating shafts of the wire feed rollers through a belt.

3. The arc welding device according to Claim 1, wherein the rotation transmitting mechanism is a gear transmission mechanism that transmits the rotation of the wire feed motor to respective rotating shafts of the wire feed rollers through a gear train.

4. The arc welding device according to any of Claims 1 to 3,
wherein the rocker drive unit includes
a rocker drive motor;
an eccentric shaft that is rotated by the rocker drive motor and has an eccentric center of rotation; and
a rocker drive arm one end of which is rotatably supported by the rocker arm and an other end of which is rotatably supported by the eccentric shaft.

5. The arc welding device according to any of Claims 1 to 3,
wherein the rocker drive unit includes
a rocker drive motor;
an eccentric shaft that is rotated by the rocker drive motor and has an eccentric center of rotation; and
an oblong groove portion provided in the rocker arm in such a manner as to extend in an arm longitudinal direction, and in which the eccentric shaft is fitted, and
wherein the eccentric shaft rocks the rocker arm by rotating in a groove of the oblong groove portion.

6. The arc welding device according to Claim 4, wherein the wire feed motor and the rocker drive motor are independent of each other.

7. The arc welding device according to Claim 5, wherein the wire feed motor and the rocker drive motor are independent of each other.

8. The arc welding device according to Claim 4, wherein one motor serves as both the rocker drive motor and the wire feed motor.

9. The arc welding device according to Claim 5, wherein one motor serves as both the rocker drive motor and the wire feed motor.

10. The arc welding device according to any of Claims 1 to 3, further comprising:
a first liner member that covers a portion of the welding wire that is to be fed toward the pair of wire feed rollers in such a manner as to be relatively movable on an outer side of the welding wire; and
a rotatable body that is rotatably supported at a position between an end of the first liner member that is nearer to the wire feed rollers and the wire feed rollers, the rotatable body having an outer peripheral groove,
wherein the welding wire is nipped between the pair of wire feed rollers after running along the outer peripheral groove of the rotatable body by at least one turn.

11. The arc welding device according to any of Claims 1 to 3, further comprising:
a second liner member provided on a downstream side with respect to the wire feed rollers in the direction of wire feed and that covers the welding wire in such a manner as to be relatively movable on an outer side of the welding wire,
wherein the second liner member reciprocates along with the rocking of the rocker arm, with an end of the second liner member that is on the upstream side in the direction of wire feed being fixed to the rocker arm.

12. The arc welding device according to Claim 11,
wherein the welding torch includes
a torch body having a liner insertion hole through which the second liner member movably extends;
a contact tip having a wire insertion hole extending in an axial direction, the contact tip being fixed to a distal end of the torch body; and
a cylindrical shield nozzle provided around an outer periphery of the contact tip with a gap provided in between, one end of the shield nozzle being fixed to the torch body with an insulating material provided in between, and
wherein the welding wire covered with the second liner member extending through the liner insertion hole projects from an end of the second liner member that is on the downstream side in the direction of wire feed, and is inserted into the wire insertion hole.

13. The arc welding device according to Claim 11,
wherein the welding torch includes
a torch body having a liner insertion hole through which the second liner member movably extends;
a contact tip having a wire insertion hole extending in an axial direction, the contact tip being provided at a distal portion of the torch body; and
a cylindrical shield nozzle provided around an outer periphery of the contact tip with a gap provided in between, one end of the shield nozzle being fixed to the torch body with an insulating material provided in between,
wherein the torch body has a receiving hole communicating with the liner insertion hole, and
wherein the contact tip is reciprocatably received in the receiving hole such that the welding wire covered with the second liner member in the liner insertion hole projects from an end of the second liner member that is on the downstream side in the direction of wire feed, and is inserted into the wire insertion hole.

14. The arc welding device according to Claim 13, further comprising:
an electrically conductive member fixed to the end of the second liner member that is on the downstream side in the direction of wire feed, and provided slidably in the receiving hole,
wherein the contact tip is fixed to the electrically conductive member.

15. An arc welding method in which welding is performed by generating an arc from a welding wire that is fed to a torch tip of a welding torch, the method comprising:
feeding the welding wire nipped between a pair of wire feed rollers attached to a rocker arm that is rotatable on an output shaft of a wire feed motor to the torch tip by rotating the pair of wire feed rollers by a use of the wire feed motor; causing the welding wire to reciprocate in a direction of wire feed by rocking the rocker arm; and supplying a welding current to the welding wire from a welding power supply unit such that arcing and shorting are repeated at a distal end of the welding wire,
wherein the welding power supply unit outputs the welding current in an output cycle including
a first term in which a low current las is outputted after a short circuit is opened and an arc is generated;
a second term in which an arcing-duration pulsed current lap that is higher than the low current las and is intended for generation of a droplet is outputted;
a third term in which after the arcing-duration pulsed current lap is outputted, a base current Iab that is lower than the arcing-duration pulsed current lap is outputted until a short circuit occurs;
a fourth term in which after the arc is extinguished, a low current Iss is outputted;
a fifth term in which a shorting-duration pulsed current Isp that is higher than the low current Iss is outputted until a total duration Tt elapsed from a start of the first term reaches 70 to 95% of a rocking period τ of the rocker arm; and
a sixth term in which a short-circuit base current Isb that is lower than the shorting-duration pulsed current Isp is outputted until another arc is generated.

16. The arc welding method according to Claim 15, wherein the welding power supply unit calculates an arcing duration ratio K = Ta/(Ta+Ts) from an arcing duration Ta in which an arc is generated and a shorting duration Ts in which the arc is extinguished in one rocking period; and, in accordance with a difference between the calculated arcing duration ratio K and a preset arcing duration ratio, the welding power supply unit increases or decreases at least the arcing-duration pulsed current lap among the arcing-duration pulsed current lap, the base current Iab, the shorting-duration pulsed current Isp, and a duration Tap of the second term such that the arcing duration ratio K becomes close to the set arcing duration ratio.

17. The arc welding method according to Claim 16, wherein the welding power supply unit changes the set value of the duration Tap of the second term in accordance with changes in a set value provided by an arcing-duration-ratio setter, and changes the arcing duration ratio within a range of 50 to 90%.

18. The arc welding method according to any of Claims 15 to 17, wherein, in accordance with changes in a set value provided by an arcing-duration-ratio setter, the welding power supply unit changes respective set values of the arcing-duration pulsed current Iap, the base current Iab, the duration Tap of the second term, and a duration Tab of the third term such that a sum of a product of the arcing-duration pulsed current Iap and the duration Tap of the second term and a product of the base current Iab and the duration Tab of the third term becomes a constant value.

19. The arc welding method according to any of Claims 15 to 17, wherein the welding power supply unit calculates any of voltage values including an average of voltages in one rocking period in which arcing and shorting occur, an average of arc voltages in the arcing duration in which an arc is generated, and a maximum value of the arc voltages in the arcing duration; and, in accordance with a difference between the calculated voltage value and the preset welding voltage, the welding power supply unit increases or decreases at least the arcing-duration pulsed current Iap among the arcing-duration pulsed current lap, the base current Iab, the shorting-duration pulsed current Isp, and a duration Tap of the second term such that the voltage value becomes close to the set welding voltage.
